# EUROPÄISCHE PATENTANMELDUNG

(11) **EP 3 480 529 A1**
(43) Veröffentlichungstag der Anmeldung: **08.05.2019**
(21) Anmeldenummer: 18187683.0
(22) Anmeldetag: 07.08.2018
(51) Int. Cl.: F24F 11/48, F24F 11/00, F24F 11/49, F24F 11/64, G05D 7/06, F24F 3/044, F24F 11/74, F24F 140/40, F24F 110/30

(54) **VERFAHREN ZUR KLIMATISIERUNG VON RAUMEINHEITEN EINES GEBÄUDES**

(30) Priorität: 07.11.2017 EP 17200256
(71) Anmelder: Möhlenhoff GmbH, 38229 Salzgitter (DE)
(72) Erfinder: Salge, Immo, 38104 Braunschweig (DE)
(74) Vertreter: Döring, Roger

(57) **Zusammenfassung**

Es wird ein Verfahren zur Klimatisierung von Raumeinheiten eines Gebäudes angegeben, bei welchem pro Raumeinheit ein in derselben endender Zuluftkanal vorgesehen wird. In den Raumeinheiten wird jeweils mindestens ein elektrische Signale liefernder Sensor angebracht, dessen Signale von den im jeweiligen Raum herrschenden klimatischen Bedingungen abhängig sind, und beiwelchem die Größe derden Raumeinheiten zuzuführenden Volumenströme von Frischluft durch eine Zentraleeingestellt wird. Vor Beginn des Verfahrens wird in jedem Zuluftkanaleine dessen Durchlaßweite bestimmende, durch einen elektrischen Stellantrieb verstellbare Luftdrosselangeordnet. In einem Rechnerwird ein Koordinatensystem abgelegt und gespeichert, in dem auf der Ordinate der Druckverlust der Luftdrosseln und auf der Abszisse der durch dieselben leitbare Volumenstrom von Luft angegeben sind, und in dem ein Kennlinienfeld mit den unterschiedlichen prozentualen Öffnungsquerschnitten der Luftdrosseln entsprechenden Kennlinien enthalten ist. Zu Beginn des Verfahrens wird zunächst über die Zuluftkanäle aller Raumeinheiten unter Druckstehende Luft bei 100 % Offenstellung aller Luftdrosseln in alle Raumeinheiten geblasen. Aus der Abweichung zwischen den gemessenen Volumenströmen und den erforderlichen Volumenströmen wird derhöchste Druckverlust in einem der Zuluftkanäle ermittelt und auf der Ordinate des Koordinatensystems markiert. Auf der 0%-Kennlinie des Kennlinienfeldes wird ein entsprechender, für alle Luftdrosseln gemeinsamer Nullpunkt vorgegeben, und zwischen dem Nullpunkt und für alle Luftdrosseln geltenden Versorgungspunkten werden Arbeitskennlinien in das Koordinatensystem eingetragen.

## Beschreibung

Die Erfindung bezieht sich auf ein Verfahren zur Klimatisierung von Raumeinheiten eines Gebäudes gemäß dem Oberbegriff des Patentanspruchs 1.

Ein solches Verfahren geht beispielsweise aus der DE 10 2010 006 455 B4 hervor.

Eine Raumeinheit kann aus einem Einzelraum oder aus mindestens zwei Räumen bestehen, die bezogen auf Luft strömungstechnisch miteinander verbunden sind. Der Einfachheit halber wird in der folgenden Beschreibung statt des Wortes "Raumeinheit" das Wort "Raum" verwendet.

Zur Durchführung des geschilderten Verfahrens werden in jedem Raum eines Gebäudes mindestens eine Luft-drossel - im Folgenden kurz "Drossel" genannt - und mindestens ein Sensor angebracht. Die Drossel ist jeweils in einem Zuluftkanal oder in einem Abluftkanal angebracht. Der Sensor ist beispielsweise ein CO₂-Sensor oder ein Feuchtigkeitssensor oder er reagiert auf unterschiedliche Gerüche. Die zu den einzelnen Räumen führenden Zuluftkanäle, die von der Zentraleinheit des Gebäudes ausgehen können, haben unterschiedliche Längen.

Für die Durchführung des Verfahrens werden grundsätzlich Drosseltypen eingesetzt, deren Druck- und Volumenkennfeld bekannt ist. Es handelt sich um durch einen elektrischen Stellantrieb verstellbare Drosseln. Für diese Drosseln ist ein Kennlinienfeld bekannt, das den Druckverlust über dem Volumenstrom wiedergibt. Die Kennlinien erfassen den Volumenstrom von 0 % bis 100 % mit entsprechender Zuordnung von elektrischen Spannungen von 0V bis 10V. Diese Spannungswerte können den elektrischen Stellantrieben zugeordnet werden, welche die jeweilige Drossel zwischen ihrer maximalen Offenstellung (100 %) und ihrer Schließstellung (0 %) verstellen.

Für den Einsatz der Drosseln als Steuerelement für die unterschiedlichen Volumenströme ist es erforderlich, dass der Volumenstrom bei einer beliebigen Offenstellung der Drossel bestimmt werden kann. Die entsprechende Kenntnis über den aktuell vorliegenden Volumenstrom kann auch für die Einstellung eines gleichen Abluft- und Zuluftvolumenstroms verwendet werden.

In der DE 40 31 113 C2 ist eine Einkanal-Klimaanlage mit variablem Volumenstrom zur jeweils getrennten Regelung der Temperatur in mehreren Räumen beschrieben. In der Anlage wird eine zentrale Zuluftspeiseeinrichtung mit einer einen Wärmetauscher aufweisenden Einheit eingesetzt. In einem Hauptkanal und von demselben ausgehenden Zweigkanälen sind Klappen angeordnet, durch welche die Menge der von einem mit dem Wärmetauscher gekoppelten Gebläse abgegebenen Luft den einzelnen Räumen als gekühlte oder erwärmte Luft zugeführt werden kann.

Aus der eingangs erwähnten DE 10 2010 006 455 B4 geht ein Verfahren zur Be- und Entlüftung eines Gesamtraums mit mehreren Teilräumen einer Wohneinheit hervor. In den Wandungen der Teilräume sind Wanddurchbrüche mit verstellbaren Luftzuführeinrichtungen und Luftabführeinrichtungen angebracht. In den Teilräumen sind außerdem Sensoren angeordnet, welche für einen jeweiligen Teilraum eine Luftwechselrate bestimmen sollen. Dazu sind alle Sensoren mit einer Steuereinheit verbunden, durch welche die Luftzuführeinrichtungen und die Luftabführeinrichtungen so eingestellt werden, dass die für die gewünschten klimatischen Bedingungen erforderliche Luftwechselrate erreicht wird.

Durch das eingangs geschilderte Verfahren soll eine automatische Regelung des Volumenstroms ermöglicht werden.

Dieses Ziel wird entsprechend den kennzeichnenden Merkmalen des Patentanspruchs 1 und der Unteransprüche erreicht.

Vor Beginn des Verfahrens wird in jedem Zuluftkanal eine dessen Durchlaßweite bestimmende, durch einen elektrischen Stellantrieb verstellbare Luftdrossel angeordnet, deren prozentualer Öffnungsquerschnitt zwischen einer 0 % der Durchlaßweite entsprechenden Schließstellung und einer 100 % der Durchlaßweite entsprechenden maximalen Offenstellung einstellbar ist. In einem bei dem Verfahren eingesetzten Rechner wird ein Koordinatensystem abgelegt und gespeichert, in dem auf der Ordinate der Druckverlust der Luftdrosseln und auf der Abszisse der durch dieselben leitbare Volumenstrom von Luft angegeben sind, und in dem ein Kennlinienfeld mit den unterschiedlichen prozentualen Öffnungsquerschnitten der Luftdrosseln entsprechenden Kennlinien enthalten ist, die 0 % bis 100 % Öffnungsquerschnitt erfassen. Zu Beginn des Verfahrens wird zunächst über die Zuluftkanäle aller Raumeinheiten unter Druck stehende Luft bei 100 % Offenstellung aller Luftdrosseln in alle Raumeinheiten geblasen und der dabei an den einzelnen Luftdrosseln vorhandene Volumenstrom gemessen. Aus der Abweichung zwischen den gemessenen Volumenströmen und den erforderlichen Volumenströmen wird der höchste Druckverlust in einem der Zuluftkanäle ermittelt und auf der Ordinate des Koordinatensystems markiert. Auf der 0%-Kennlinie des Kennlinienfeldes wird ein entsprechender, für alle Luftdrosseln gemeinsamer Nullpunkt vorgegeben. Zwischen dem Nullpunkt und für alle Luftdrosseln geltenden Versorgungspunkten werden Arbeitskennlinien in das Koordinatensystem eingetragen. Die Größe des einer jeweiligen Raumeinheit zuzuführenden Volumenstroms wird der Luft durch den in der entsprechenden Raumeinheit angebrachten Sensor eingestellt und der prozentuale Öffnungsquerschnitt der in der jeweiligen Raumeinheit angeordneten Luftdrossel wird durch einen in der Zentrale angeordneten Regler auf einen Wert eingestellt, welcher der Kennlinie des Kennlinienfeldes entspricht, die durch den auf seiner individuellen Arbeitskennlinie liegenden Schnittpunkt verläuft, welcher dem vom zugehörigen Sensor angegebenen Volumenstrom entspricht, wobei von dem Regler ein entsprechendes elektrisches Signal an den Stellantrieb der Luftdrossel übertragen wird.

Dieses Verfahren arbeitet, nachdem alle notwendigen Parameter im Rechner abgelegt und gespeichert sind, vollautomatisch. Die gewünschten bzw. erforderlichen klimatischen Bedingungen in den einzelnen Räumen werden nach Maßgabe des entsprechenden Sensors dadurch erreicht, dass der einem Raum zuzuführende Volumenstrom an Frischluft durch Einstellung des Öffnungsquerschnitts der entsprechenden Drossel angepaßt wird. Für den für dieses Verfahren beschriebenen Einsatz einer Drossel als Volumenstromregler ist die Kenntnis des erforderlichen Vordruckes nötig. Hierfür wird zunächst der Zuluftkanal mit dem höchsten zu erwartenden Druckverlust bestimmt. Dies geschieht zunächst durch Einstellung eines Gebläses, mit dem die Zuluft zugeführt wird, auf den Maximalvolumenstrom. Anschließend werden alle Einzelvolumenströme bei 100 % geöffneten Drosseln gemessen. Die so gemessenen Volumenströme werden mit den erforderlichen Volumenströmen verglichen. Der Zuluftkanal mit der maximalen negativen Abweichung zwischen gemessenem und erforderlichem Volumenstrom ist der Zuluftkanal mit dem höchsten zu erwartenden Druckverlust. Im nächsten Schritt werden alle Drosseln bis auf die mit dem höchsten zu erwartenden Druckverlust geschlossen. Nun wird der Vordruck durch Drehzahlerhöhung des die Frischluft einblasenden Gebläses soweit erhöht, bis der erforderliche Volumenstrom dieses Zuluftkanals erreicht ist.

Der dabei ermittelte Vordruck wird als parallel zur Abszisse verlaufende Gerade in das Kennlinienfeld eingezeichnet. Ihr Schnittpunkt mit der Kennlinie für 0 % Öffnungsquerschnitt entspricht dem minimalen Volumenstrom. Er ist ein für alle Räume des Gebäudes geltender gemeinsamer Nullpunkt. Der maximale Volumenstrom für einen Raum wird vorgegeben bzw. berechnet. Er definiert einen Schnittpunkt auf der Kennlinie für 100 % Öffnungsquerschnitt. Die beiden Schnittpunkte werden durch eine Arbeitskennlinie verbunden.

Für die restlichen Räume des Gebäudes werden ebenfalls Arbeitskennlinien ermittelt und in das Kennlinienfeld eingezeichnet, die alle im erwähnten Schnittpunkt mit der Kennlinie für 0 % Öffnungsquerschnitt, dem Nullpunkt, anfangen und bei einem durch den für den jeweiligen Raum vorgegebenen bzw. berechneten maximalen Volumenstrom bestimmten Schnittpunkt, dem jeweiligen Versorgungspunkt, auf der entsprechenden Kennlinie des Kennlinienfeldes enden.

Das Verfahren nach der Erfindung wird anhand der Zeichnungen als Ausführungsbeispiel erläutert.

Es zeigen:
Fig. 1 schematisch einige Räume eines Gebäudes mit an dieselben angeschlossenen Zu- und Abluftkanälen.
Fig. 2 ein Koordinatensystem mit Kennlinien für eine Drossel.
Fig. 3 ein Koordinatensystem mit Kennlinien für drei Drosseln.
Fig. 4 ein gegenüber Fig. 2 ergänztes Koordinatensystem.

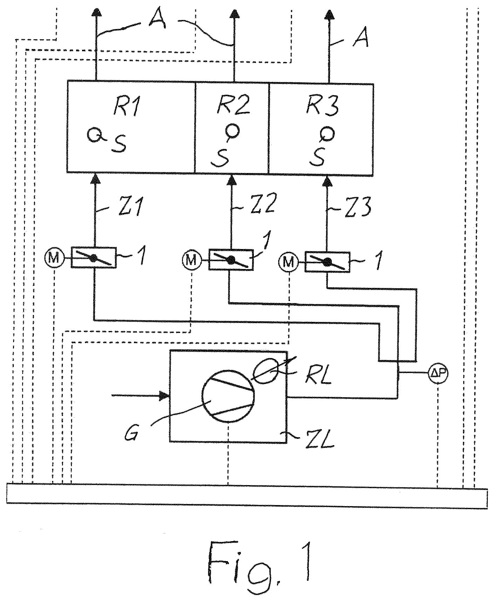

In Fig. 1 sind rein schematisch, ohne wirkliche Zuordnung innerhalb eines Gebäudes drei Räume R1, R2 und R3 dargestellt, an welche Zuluftkanäle Z1, Z2 und Z3 angeschlossen sind, die von einer Zentrale ZL ausgehen. In der Zentrale ZL ist ein Gebläse G bzw. ein Ventilator angeordnet. In jedem der Räume R1, R2 und R3 befindet sich ein Sensor S, der elektrisch mit einem in der Zentrale ZL befindlichen Regler RL verbunden ist. In der Zentrale ZL ist außerdem ein elektronischer Rechner vorhanden.

Entsprechend Fig. 1 ist an jeden der Räume R1, R2 und R3 ein Abluftkanal A angeschlossen. Es soll insgesamt mindestens ein Abluftkanal vorhanden sein. In jedem der Zuluftkanäle Z1, Z2 und Z3 ist ebenso wie in den Abluftkanälen eine Luftdrossel 1 - im Folgenden kurz "Drossel 1" genannt - angeordnet, die jeweils durch einen elektrischen Antrieb M verstellbar ist. Das heißt, dass der Öffnungsquerschnitt des jeweiligen Kanal durch den zugehörigen Antrieb M verstellbar ist, und zwischen "geschlossen" mit 0 % Öffnungsquerschnitt und "voll geöffnet" mit 100 % Öffnungsquerschnitt. Die Antriebe M sind ebenso wie die Sensoren S elektrisch leitend mit dem Regler RL verbunden.

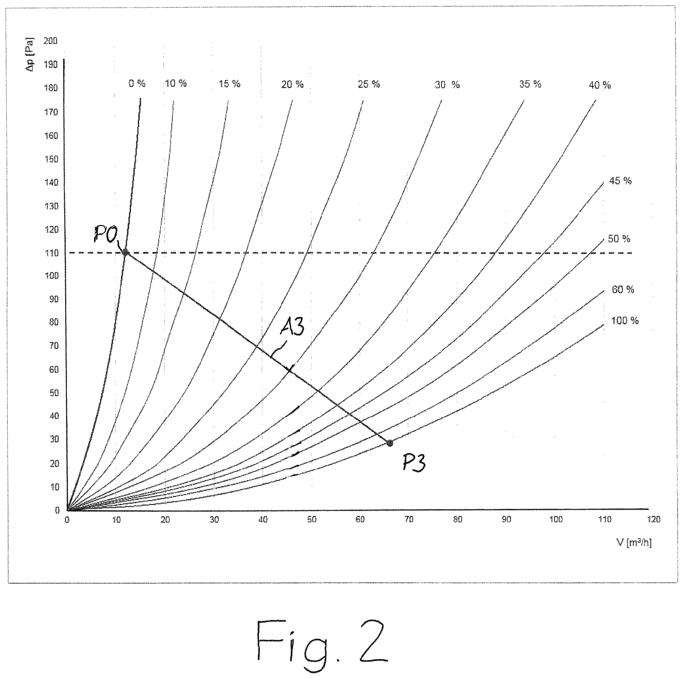

Die Drosseln 1 und ihre Wirkungsweise sind grundsätzlich bekannt. Für solche Drosseln gibt es ein aus den Fig. 2 bis 4 ersichtliches Kennlinienfeld mit einer Kennlinie für 0 % bis zu einer Kennlinie für 100 % bezogen auf den Öffnungsquerschnitt der einzelnen Drosseln. Das Kennlinienfeld ist in einem Koordinationssystem eingetragen, in dem der Druckverlust Δp in Pa über dem Volumenstrom V in m³/h aufgetragen ist. Es wird mit Vorteil für alle Kanäle des Gebäudes eine gleich aufgebaute und wirksame Drossel 1 eingesetzt.

In einem ersten Verfahrensschritt wird in dem elektronischen Rechner das den eingesetzten Drosseln 1 entsprechende Koordinatensystem abgelegt und gespeichert. Daraufhin werden die Volumenströme geplant bzw. berechnet, die den einzelnen Räumen R1, R2 und R3 als Frischluft zugeführt werden sollen. Es handelt sich dabei im Wesentlichen um Fachleuten bekannte Erfahrenswerte. Solche Volumenströme sind beispielsweise für den Raum R1 32 m³/h, für den Raum R2 66 m³/H und für den Raum 370 m³/h. Das ergibt zusammen 168 m³/h als Soll-Gesamtvolumenstrom.

In einem zweiten Verfahrensschritt werden alle Drosseln 1 voll geöffnet und das Gebläse G bzw. der Ventilator wird auf den Soll-Gesamtvolumenstrom von 168 m³/h eingestellt. Die zu den einzelnen Räumen führenden Zuluftkanäle Z1, Z2 und Z3 haben unterschiedliche Längen und damit unterschiedliche Luftleitungswiderstände. Die den drei Räumen R1, R2 und R3 bei gleichbleibendem Soll-Gesamtvolumenstrom tatsächlich zugeführten Volumenströme werden gemessen. Sie betragen für den Raum R1 45 m³/h, für den Raum R2 65 m³/h und für den Raum R3 58 m³/h. Der Raum R3 hat damit gegenüber dem geplanten bzw. berechneten Sollwert die höchste Abweichung. Das bedeutet, dass für den Zuluftkanal Z3 zum Raum R3 der höchste Druckverlust besteht.

In einem dritten Verfahrensschritt werden jetzt die Drosseln 1 der zu den Räumen R1 und R2 führenden Zuluftkanäle Z1 und Z2 geschlossen. während die Drossel 1 für den Raum R3 weiter voll geöffnet bleibt, also einen Öffnungsquerschnitt von 100 % hat. Durch Erhöhung der Drehzahl des Gebläses G bzw. des Ventilators wird der dem Raum R3 zugeführte Volumenstrom bis zum Erreichen des Sollwerts von 70 m³/h erhöht. Der sich dabei ergebende Schnittpunkt mit der 100 %-Kennlinie wird entsprechend Fig. 2 als Versorgungspunkt P3 in das Kennlinienfeld eingetragen und im Rechner gespeichert. Der sich dabei für den Raum R3 ergebende Druckverlust beträgt 110 Pa. Das wird auf der Ordinate des Koordinationssystems eingetragen. Eine diesem Druckverlust entsprechende parallele Gerade zur Abzisse des Koordinationssystems ergibt im Schnittpunkt mit der 0 %-Kennlinie den Punkt P0, der für alle Räume R1, R2 und R3 ein gemeinsamer Nullpunkt ist.

Eine Verbindungslinie zwischen den Punkten P0 und P3 - sie ist in Fig. 2 als Gerade eingezeichnet - ergibt eine für den Raum R3 geltende Arbeitskennlinie A3. Sie kann auch einen von der Geraden abweichenden Verlauf haben.

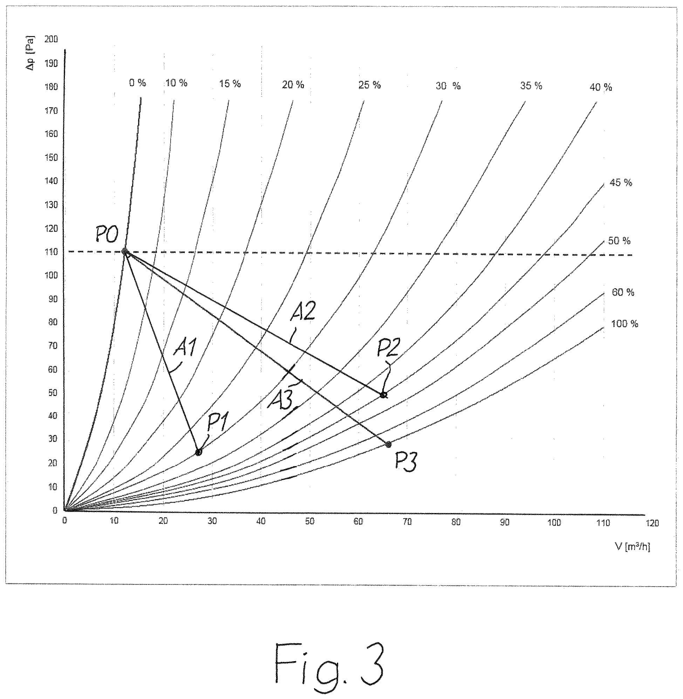

In ähnlicher Verfahrensweise werden die in Fig. 3 eingetragenen Arbeitskennlinien A1 und A2 für die Räume R1 und R2 gewonnen. Dazu wird zunächst die Drossel 1 für den Raum R1 geöffnet und der Öffnungsquerschnitt derselben wird durch Verstellung des Antriebs M derselben kontinuierlich vergrößert. Wenn der von der Drossel 1 durchgelassene Volumenstrom den geplanten bzw. berechneten Volumenströmen von 32 m³/h erreicht hat, wird die Drossel nicht mehr weiter geöffnet. Der

Öffnungsquerschnitt der Drossel 1 des Raumes R1 liegt dann bei 30 %. Der entsprechende Versorgungspunkt P1 des Raumes R1 liegt also auf der 30 %-Kennlinie, so wie es in Fig. 3 eingezeichnet ist. Zwischen den Punkten P0 und P1 verläuft die Arbeitskennlinie A1 für den Raum R1. Auch die Koordinaten des Punktes P1 werden dem Rechner aufgegeben und in demselben gespeichert.

Anschließend wird der Versorgungspunkt P2 für den Raum R2 analog zum Versorgungspunkt R1 ermittelt. Er liegt gemäß Fig. 3 für den Volumenstrom von 66 m³/h auf der 45 %-Kennlinie. Die Drossel 1 für den Raum R2 hat also einen Öffnungsquerschnitt von 45 %. Die Arbeitskennlinie A2 für den Raum R2 zwischen den Punkten P0 und P2 ist ebenfalls in Fig. 3 eingetragen. Auch ihre Daten werden im Rechner gespeichert.

Mit den verschiedenen Volumenströmen wird eine bekannte Menge an Frischluft als Zuluft in die einzelnen Räume eingeleitet. Eine entsprechende Menge an Luft muß als Abluft aus den Räumen des Gebäudes abgeführt werden. Das kann entsprechend Fig. 1 aus allen Räumen des Gebäudes heraus erfolgen, die dazu mit Abluftkanälen A ausgerüstet sind, deren Öffnungsquerschnitte ebenfalls durch Drosseln 1 veränderbar sind. Die für einen erforderlichen Abluftvolumenstrom erforderliche Drosselöffnung kann ebenfalls analog zu der geschilderten Zufuhr von Frischluft jeweils mit einer zuvor ermittelten Arbeitskennlinie erhalten werden.

Danach erfolgt die Einregulierung der Abluftanlage in dem Sinne der vorher durchgeführten Arbeitsschritte für die Frischluftzufuhr.

Mit dem geschilderten Verfahren ist eine Grundeinstellung aller Drosseln 1 des Gebäudes entsprechend den angegebenen Volumenströmen erreicht. Diese Grundseinstellung bleibt solange erhalten, wie sich in den Räumen R1, R2 und R3 nichts ändert.

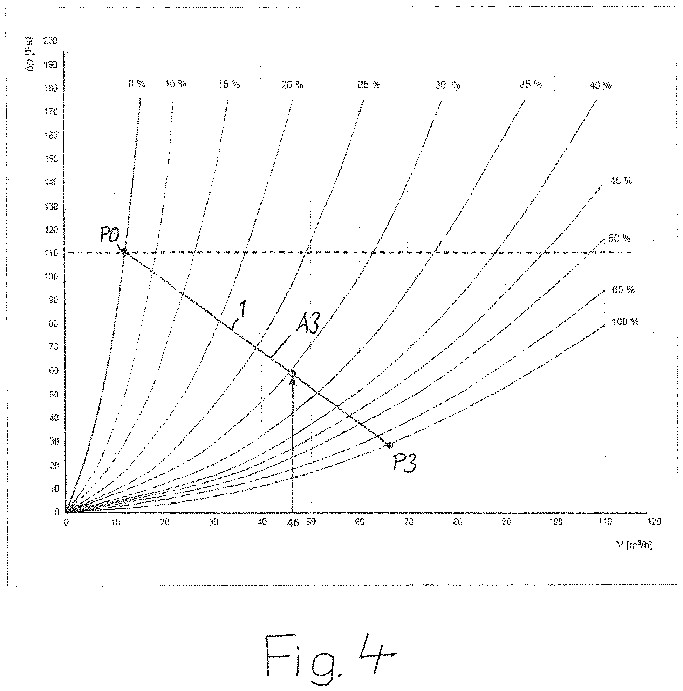

Am Beispiel des Raums R3 wird im Folgenden der Ablauf des Verfahrens bei einer Änderung des Frischluftbedarfs anhand von Fig. 4 erläutert.

Der Sensor S des Raumes R3 überträgt an die Zentrale ZL ein Signal, dass statt des Volumenstroms von 70 m³/h nur noch ein Volumenstrom von 46 m³/h benötigt wird. Die Drossel 1 des Raumes R3 muß entsprechend verstellt werden, und zwar nach Maßgabe der im Rechner gespeicherten Arbeitskennlinie A3. Der Schnittpunkt der für den Volumenstrom 46 m³/h maßgeblichen Ordinate mit der Arbeitskennlinie A3 liegt auf der 30 %-Kennlinie des Kennlinienfeldes. Der Öffnungsquerschnitt der Drossel 1 des Raumes R3 wird durch den Antrieb M dementsprechend auf 30 % eingestellt.

## Patentansprüche

1. Verfahren zur Klimatisierung von Raumeinheiten eines Gebäudes, bei welchem pro Raumeinheit ein in derselben endender Zuluftkanal vorgesehen wird, bei welchem in dem Gebäude mindestens ein Abluftkanal angebracht wird, bei welchem in den Raumeinheiten jeweils mindestens ein elektrische Signale liefernder Sensor angebracht wird, dessen Signale von den im jeweiligen Raum herrschenden klimatischen Bedingungen abhängig sind, und bei welchem die Größe der den Raumeinheiten zuzuführenden Volumenströme von Frischluft durch eine Zentrale eingestellt wird, **dadurch gekennzeichnet,**
- **dass** vor Beginn des Verfahrens in jedem Zuluftkanal eine dessen Durchlaßweite bestimmende, durch einen elektrischen Stellantrieb verstellbare Luftdrossel angeordnet wird,
- **dass** in einem Rechner ein Koordinatensystem abgelegt und gespeichert wird, in dem auf der Ordinate der Druckverlust der Luftdrosseln und auf der Abszisse der durch dieselben leitbare Volumenstrom von Luft angegeben sind, und in dem ein Kennlinienfeld mit den unterschiedlichen prozentualen Öffnungsquerschnitten der Luftdrosseln entsprechenden Kennlinien enthalten ist,
- **dass** zu Beginn des Verfahrens zunächst über die Zuluftkanäle aller Raumeinheiten unter Druck stehende Luft bei 100 % Offenstellung aller Luftdrosseln in alle Raumeinheiten geblasen und der dabei an den einzelnen Luftdrosseln vorhandene Volumenstrom gemessen wird,
- **dass** aus der Abweichung zwischen den gemessenen Volumenströmen und den erforderlichen Volumenströmen der höchste Druckverlust in einem der Zuluftkanäle ermittelt und auf der Ordinate des Koordinatensystems markiert wird,
- **dass** auf der 0%-Kennlinie des Kennlinienfeldes ein entsprechender, für alle Luftdrosseln gemeinsamer Nullpunkt vorgegeben wird, und
- **dass** zwischen dem Nullpunkt und für alle Luftdrosseln geltenden Versorgungspunkten Arbeitskennlinien in das Koordinatensystem eingetragen werden.

2. Verfahren nach Anspruch 1, **dadurch gekennzeichnet, dass** der prozentuale Öffnungsquerschnitt der Luftdrosseln der Raumeinheiten nach Maßgabe der Sensoren der Raumeinheiten entlang der zu jeder Raumeinheit gehörenden, individuellen Arbeitskennlinie geregelt wird.

3. Verfahren nach Anspruch 1, **dadurch gekennzeichnet,**
- **dass** der prozentuale Öffnungsquerschnitt der Luftdrosseln zwischen einer 0 % der Durchlaßweite entsprechenden Schließstellung und einer 100 % der Durchlaßweite entsprechenden maximalen Offenstellung eingestellt wird,
- **dass** die den unterschiedlichen prozentualen Öffnungsquerschnitten der Luftdrosseln entsprechenden Kennlinien einen 0 % bis 100 % erfassenden Öffnungsquerschnitt haben,
- **dass** die Größe des einer jeweiligen Raumeinheit zuzuführenden Volumenstroms der Luft durch den in der entsprechenden Raumeinheit angebrachten Sensor eingestellt wird und
- **dass** der prozentuale Öffnungsquerschnitt der in der jeweiligen Raumeinheit angeordneten Luftdrossel durch einen in der Zentrale angeordneten Regler auf einen Wert eingestellt wird, welcher der Kennlinie des Kennlinienfeldes entspricht, die durch den auf seiner individuellen Arbeitskennlinie liegenden Schnittpunkt verläuft, welcher dem vom zugehörigen Sensor angegebenen Volumenstrom entspricht, wobei von dem Regler ein entsprechendes elektrisches Signal an den Stellantrieb der Luftdrossel übertragen wird.

4. Verfahren nach Anspruch 1, **dadurch gekennzeichnet,**
- **dass** bei dem Verfahrensschritt, bei welchem über die Zuluftkanäle aller Raumeinheiten unter Druck stehende Luft bei 100 % Offenstellung aller Luftdrosseln in alle Raumeinheiten geblasen wird, der Zuluftkanal mit dem höchsten Druckverlust ermittelt wird,
- **dass** danach die Luftdrosseln aller anderen Zuluftkanäle geschlossen werden,
- **dass** dann der Druck der dem Zuluftkanal mit dem höchsten Druckverlust zugeführten Luft solange erhöht wird, bis der für den entsprechenden Raum erforderliche Volumenstrom erreicht ist, und
- **dass** der diesem Volumenstrom entsprechende Druck auf der Ordinate des Koordinatensystems bzw. auf der 0 %-Kennlinie des Kennlinienfeldes als gemeinsamer Nullpunkt markiert wird.

5. Verfahren nach Anspruch 1, **dadurch gekennzeichnet, dass** der Luftkanal mit dem höchsten Druckverlust durch Vergleich der gemessenen Volumenströme mit den erforderlichen Volumenströmen ermittelt wird, und zwar durch Berechnung der maximalen Abweichung der Volumenströme voneinander, bei 100 % Offenstellung aller Luftdrosseln, wobei alle Luftdrosseln bis auf die zuvor ermittelte Luftdrossel mit der maximalen Abweichung geschlossen werden.

6. Verfahren nach Anspruch 1, **dadurch gekennzeichnet, dass** von dem gemessenen Wert des Druckverlustes ausgehend eine Parallele zur Abszisse in das Koordinationssystem eingezeichnet wird, deren Schnittpunkt mit der 0 %-Kennlinie des Kennlinienfeldes als der gemeinsame Nullpunkt vorgegeben wird.

7. Verfahren nach Anspruch 1, **dadurch gekennzeichnet, dass** in jedem Abluftkanal des Gebäudes ebenfalls eine durch einen elektrischen Stellantrieb verstellbare Luftdrossel angeordnet wird, die entsprechend dem Verfahren nach Anspruch 1 eingestellt wird.

8. Verfahren nach Anspruch 1, **dadurch gekennzeichnet, dass** alle Stellantriebe der Luftdrosseln mit dem Regler verbunden werden.

9. Verfahren nach Anspruch 1, **dadurch gekennzeichnet, dass** in der Zentrale, die sich mit Vorteil im Gebäude befindet und an die alle Zuluftkanäle angeschlossen werden, mindestens ein Gebläse angeordnet wird.

10. Verfahren nach Anspruch 1, **dadurch gekennzeichnet, dass** in der Zentrale, die sich mit Vorteil im Gebäude befindet und an die alle Abluftkanäle angeschlossen werden, mindestens ein Gebläse angeordnet wird.
